# EUROPÄISCHE PATENTSCHRIFT

(11) **EP 2 180 678 B1**
(45) Veröffentlichungstag und Bekanntmachung des Hinweises auf die Patenterteilung: **26.06.2013**
(21) Anmeldenummer: 09174121.5
(22) Anmeldetag: 27.10.2009
(51) Int. Cl.: H04M 7/12, H04M 1/60, H04M 1/725

(54) **Vorrichtung und Verfahren zur Bandbreitenanpassung in einem Telekommunikationsnetzwerk sowie zugehöriges Computer-Programm-Produkt**
Device and method for adjusting bandwidth in a telecommunications network and accompanying computer program product
Dispositif et procédé d'adaptation des largeurs de bande dans un réseau de télécommunication et produit de programme informatique correspondant

(30) Priorität: 27.10.2008 DE 102008053355
(43) Veröffentlichungstag der Anmeldung: 28.04.2010
(73) Patentinhaber: Gigaset Communications GmbH, 81379 München (DE)
(72) Erfinder: Christoph Wedi, 46395 Bocholt (DE)
(74) Vertreter: Michalski Hüttermann & Partner Patentanwälte

(56) Entgegenhaltungen:
- EP-A1- 1 835 709
- EP-A2- 0 783 235
- WO-A1-2004/059961
- WO-A1-2007/019857
- US-B1- 6 349 213

## Beschreibung

Die vorliegende Erfindung bezieht sich auf eine Vorrichtung und ein Verfahren zur Bandbreitenanpassung in einem Telekommunikationsnetzwerk sowie ein zugehöriges Computer-Programm-Produkt und insbesondere auf eine Vorrichtung und ein Verfahren zur Bandbreitenanpassung in einem Netzwerkknoten bzw. sogenannten Gateway, einem Telekommunikationsendgerät oder einer Teilnehmereinrichtung, bei der zumindest ein mobiles Endgerät über eine Basisstation an einen Netzwerkknoten angeschlossen ist.

Durch die Erweiterung von herkömmlichen Telefondiensten in leitungsvermittelten Kommunikationssystemen durch neuartige Telefondienste, wie beispielsweise VoIP-Telefonie (Voice over IP) in paketvermittelten Kommunikationssystemen, wird es zukünftig möglich sein, immer mehr Telefonverbindungen in erhöhter Qualität bzw. breitbandig (Wide Band) zu führen. Teilnehmerseitig werden hierbei zunehmend Netzwerkknoten bzw. sogenannte Gateways mit breitbandfähiger Teilnehmerschnittstelle (FXS, Foreign eXchange Subscriber interface) und immer mehr daran angeschaltete Telekommunikationsendgeräte oder teilnehmerseitige Anlagen mit breitbandfähigen analogen Anschlüssen (PSTN, Public Switched Telephone Network) ausgestattet sein. Am amtsseitigen Anschluss (FXO, Foreign eXchange Office interface) eines derartigen Netzwerkknotens bzw. Gateways liegen derzeit bereits eine Vielzahl von unterschiedlichen Signalen an, wie beispielsweise herkömmliche leitungsvermittelte analoge Signale (PSTN, schmalbandig), digitale leitungsvermittelte Signale (ISDN, 1xB schmalbandig) breitbandige digitale leitungsvermittelte Signale (ISDN, 2xB breitbandig), schmalbandige paketvermittelte Signale (VoIP (NB)) und breitbandige paketvermittelte Signale (VoIP (WB)), welche beispielsweise über sogenannte DSL-Leitungen (Digital Subscriber Line) zur Verfügung gestellt werden.

Abhängig von der jeweils gewählten Verbindung kann im Telekommunikationsnetzwerk folglich eine breitbandige (WB, Wide Band) oder schmalbandige (NB, Narrow Band) Verbindung auftreten. Wählt man allerdings eine breitbandige Betriebsart, obwohl die Gegenseite lediglich schmalbandige Verbindungen anbietet, so besteht für den Nutzer der Nachteil eines höheren Rauschpegels, obwohl dieses grundsätzlich nicht notwendig wäre.

Herkömmliche leitungsvermittelte Telekommunikationsendgeräte, Teilnehmereinrichtungen oder Telefonanlagen wie beispielsweise auf dem DECT-Standard basierende Endgeräte oder Anlagen sind bisher nicht breitbandfähig.

Um eine breitbandfähige Verbindung auf einer derartigen analogen leitungsvermittelten Leitung zu ermöglichen, gibt es verschiedene Möglichkeiten. Einerseits können die teilnehmerseitige Schnittstelle (FXS) eines Netzwerkknotens bzw. Gateways sowie die leitungsvermittelte Schnittstelle des Telekommunikationsendgeräts immer in der breitbandigen Betriebsart arbeiten, wobei jedoch der Nachteil eines erhöhten Rauschens auf Grund der erhöhten Bandbreite auch im schmalbandigen Betrieb akzeptiert werden muss. Ferner kann die breitbandige Betriebsart sowohl im Gateway als auch im Telekommunikationsendgerät über den Benutzer einstellbar sein (USER Settings), wobei jedoch der Nachteil auftritt, dass ein Benutzer jeweils die Betriebsart einstellen muss, obwohl er vielleicht gar nicht weiß, in welcher Betriebsart ein jeweiliges Gespräch geführt wird. Grundsätzlich könnte auch eine spezielle Signalisierung (beispielsweise über DTMF, Dual Tone Multiple Frequency) vom Netzwerkknoten bzw. Gateway zum Telekommunikationsendgerät bzw. Telefon angedacht werden, um hier die Geräte in die breitbandfähige Betriebsart zu versetzen. Nachteilig ist hierbei jedoch die vorhergehende Durchführung einer Standardisierung einer derartigen Schnittstelle bzw. Signalisierung.

Das Dokument WO 2004/059961 A1 zeigt eine Vorrichtung zur Bandbreitenanpassung mit einer teilnehmerseitigen Schnittstelle, einer amtsseitigen Schnittstelle (und mit einer teilnehmerseitigen Analyseeinheit zum Durchführen einer Bandbreiten-Analyse eines teilnehmerseitigen Empfangssignals und zum Erzeugen einer teilnehmerseitigen Bandbreiteninformation, sowie mit einer teilnehmerseitigen Bandbreiten-Begrenzungseinheit zum Begrenzen einer Bandbreite des teilnehmerseitigen Empfangssignals in Abhängigkeit von der teilnehmerseitigen Bandbreiteninformation.

Das Dokument EP 1 835 709 A1 beschreibt eine Vorrichtung, die eingerichtet ist, eine Bandbreitenanalyse eines Empfangssignals vorzunehmen und die Bandbreite in Abhängigkeit dieser Analyse zu begrenzen. Das Dokument WO 2007/019857 A1 zeigt eine Vorrichtung in einem Telekommunikationsnetzwerk, die eingerichtet ist, eine Bandbreitenanalyse eines Empfangssignals vorzunehmen und die Bandbreite in Abhängigkeit dieser Analyse zu begrenzen.

Der Erfindung liegt daher die Aufgabe zu Grunde eine Vorrichtung und ein Verfahren zur Bandbreitenanpassung in einem Telekommunikationsnetzwerk sowie ein zugehöriges Computer-Programm-Produkt zu schaffen, welches eine anwenderfreundliche Bandbreitenanpassung ohne die Notwendigkeit der Festlegung eines neuen Standards ermöglicht.

Erfindungsgemäß wird diese Aufgabe hinsichtlich der Vorrichtung, durch die in Patentanspruch 1 beschriebenen Merkmale gelöst.

Hinsichtlich des Verfahrens sowie des Computer-Programm-Produkts wird diese Aufgabe durch die Maßnahmen des Patentanspruchs 11 sowie 20 gelöst.

Bei Realisierung der Vorrichtung in einem Gateway mit einer teilnehmerseitigen Schnittstelle und einer amtsseitigen Schnittstelle wird eine teilnehmerseitige Analyseeinheit und eine amtsseitige Analyseeinheit zum Durchführen einer Bandbreiten-Analyse und zum Erzeugen einer teilnehmerseitigen und amtsseitigen Bandbreiteninformation vorgesehen. Ferner ist eine teilnehmerseitige und eine amtsseitige Bandbreiten-Begrenzungseinheit zum Begrenzen der Bandbreite der jeweiligen Empfangssignale in Abhängigkeit von den jeweiligen Bandbreiteninformationen vorgesehen. Auf diese weise ist die Erfindung auch auf Netzwerkknoten mit beidseitigen Signalrichtungen anwendbar. Dabei ist in einer derartigen Vorrichtung ferner eine Verknüpfungseinheit zum Verknüpfen der teilnehmerseitigen mit der amtsseitigen Bandbreiteninformation eingesetzt, wodurch eine verknüpfte Bandbreiteninformation erzeugt wird und die teilnehmerseitige Bandbreiten-Begrenzungseinheit in Abhängigkeit von der verknüpften Bandbreiteninformation angesteuert wird. Da die Telekommunikationsendgeräte üblicherweise immer oder nie breitbandfähig sind kann auf diese Weise auch für die zunächst nicht zu begrenzende Empfangsseite eine Begrenzung durchgeführt werden. Die Sprachqualität bei einer Gegenseite wird dadurch erhöht, da ein Rauschen entsprechend unterdrückt wird.

Beispielsweise kann ferner eine Einfügeeinheit zum Einfügen der amtsseitigen Bandbreiteninformation in das weiterzuleitende Eingangssignal verwendet werden. Dies ermöglicht bei Geräten von beispielsweise dem gleichen Hersteller eine herstellerintern standardisierte Signalisierung der Bandbreiteninformation zu nachgelagerten Endgeräten wie beispielsweise einer Basisstation oder einem mobilen Endgerät. Die Realisierung von Analyseeinheiten in derartigen nachgeschalteten Geräten kann dadurch entfallen.

Es wird eine Analyseeinheit zum Durchführen einer Bandbreiten-Analyse eines Empfangssignals verwendet, welche eine Bandbreiteninformation erzeugt. Eine Bandbreiten-Begrenzungseinheit begrenzt daraufhin eine Bandbreite des Empfangssignals in Abhängigkeit von der erzeugten Bandbreiteninformation. Auf diese weise werden die in einer jeweiligen Betriebsart übertragenen Sprachsignale hinsichtlich ihrer Bandbreite analysiert und die Bandbreite daraufhin an die Bandbreite des Sprachsignals angepasst.

Beispielsweise kann hierbei eine Frequenzanalyse im oberen Frequenzband des Empfangssignals durchgeführt werden, welches eine stark vereinfachte Unterscheidung zwischen schmalbandigen und breitbandigen Sprachsignalen ermöglicht. Die Frequenzanalyse kann beispielsweise auf der Fast-FourierTransformation basieren.

Vorzugsweise unterscheidet die Analyseeinheit zwischen schmalbandigen Empfangssignalen, insbesondere kleiner 4 kHz, und breitbandigen Empfangssignalen, insbesondere zwischen 4 kHz und 8 kHz, wobei die bisher üblichen Frequenzen bzw. Bandbreiten von herkömmlichen Sprachverbindungen berücksichtigt werden.

Vorzugsweise ist die Bandbreiten-Begrenzungseinheit kontinuierlich einstellbar, wobei beispielsweise das obere Frequenzband von 4 kHz bis 8 kHz langsam hinzu geschaltet oder eine Verstärkung kontinuierlich erhöht wird. Eine derartige kontinuierliche Veränderung der Bandbreite führt zu einer vom Benutzer als sehr angenehm empfundenen Bandbreitenanpassung, wobei ein Rauschen sozusagen gleichmäßig ausgeblendet wird.

Die Bandbreiter Begrenzungseinheit kann hierbei durch ein Filter oder durch eine Vielzahl von einstellbaren Codiereinheiten realisiert werden, welche oftmals bereits als Sprachcodecs ohnehin vorhanden sind. Die Kosten zur Realisierung der vorliegenden Erfindung werden dadurch wesentlich reduziert.

Optional kann die Analyseeinheit weiterhin durch einen Benutzer geschaltet werden, wodurch unabhängig vom Analyseergebnis eine jeweilige Bandbreitenbegrenzung auch manuell eingestellt werden kann.

Ferner kann die Vorrichtung eine Basisstation und zumindest ein daran angeschaltetes mobiles Endgerät aufweisen, wobei die Basisstation eine Bandbreitenerfassungseinheit zum Erfassen einer Bandbreiteninformation aus einem Empfangssignal aufweist und die erfasste Bandbreiteninformation an das zumindest eine mobile Endgerät überträgt. Das mobile Endgerät besitzt eine Bandbreiteninformation-Rückgewinnungseinheit zum Rückgewinnen der übertragen Bandbreiteninformation sowie eine Bandbreiten-Begrenzungseinheit, wobei die Bandbreitenbegrenzung auf der Grundlage der rückgewonnenen Bandbreiteninformation erfolgt. Auf diese Weise kann eine Telekommunikationsanlage mit minimalem Aufwand eine Bandbreitenanpassung durchführen.

Die Bandbreitenerfassungseinheit kann hierbei wiederum die vorstehend beschriebene Analyseeinheit oder eine Bandbreiteninformation-Rückgewinnungseinheit darstellen, die eine Bandbreiteninformation aus dem Empfangssignal zurückgewinnt. Damit können Anlagen sowohl mit Netzwerkknoten bzw. Gateways vom gleichen Hersteller kommunizieren oder aber auch direkt an ein jeweiliges Kommunikationsnetzwerk oder Geräte von anderen Herstellern angeschaltet werden.

Die Einfügeeinheit sowie die Rückgewinnungseinheit realisieren das Einfügen und Rückgewinnen der Bandbreiteninformation beispielsweise über das CLIP (Caller Line Identification Protocol).

Hinsichtlich des Verfahrens wird beispielsweise ein Analysieren einer Bandbreite eines Empfangssignals und ein Erzeugen einer zugehörigen Bandbreiteninformation durchgeführt, wobei eine Bandbreite des Empfangssignals in Abhängigkeit von der Bandbreiteninformation begrenzt wird.

Gemäß einer vorteilhaften Weiterbildung der Erfindung ist vorgesehen, dass beim Analysieren eine Frequenzanalyse im oberen Frequenzband des Empfangssignals durchgeführt wird.

Gemäß einer weiteren vorteilhaften Weiterbildung der Erfindung ist vorgesehen, dass die Frequenzanalyse auf der Fast-Fourier-Transformation basiert.

Gemäß einer vorteilhaften Ausbildung der Erfindung ist vorgesehen, dass beim Analysieren zwischen schmalbandigen, insbesondere kleiner 4 kHz, und breitbandigen, insbesondere zwischen 4 kHz und 8 kHz, Empfangssignalen unterschieden wird. Mit Vorteil ist vorgesehen, dass das Begrenzen der Bandbreite kontinuierlich erfolgt.

Insbesondere ist vorgesehen, dass das Begrenzen der Bandbreite ein Filtern ist.

Mit Vorteil ist vorgesehen, dass das Begrenzen der Bandbreite unter Verwendung von unterschiedlichen Kodiereinheiten durchgeführt wird.

Insbesondere ist vorgesehen, dass die Bandbreiteninformation von einem Benutzer geschaltet wird.

Gemäß einer vorteilhaften Weiterbildung der Erfindung ist vorgesehen, dass beim Analysieren ein teilnehmerseitiges sowie ein amtsseitiges Empfangssignal analysiert wird und eine teilnehmerseitige sowie amtsseitige Bandbreiteninformation erzeugt wird und ein Verknüpfen der Bandbreiteninformation derart durchgeführt wird, dass die Begrenzung auf eine kleinste zugehörige Bandbreite nur auf das teilnehmerseitige Empfangssignal angewendet wird.

Gemäß einer weiteren vorteilhaften Weiterbildung der Erfindung weist das Verfahren den weiteren Schritt auf: Einfügen der amtsseitigen Bandbreiteninformation in das weiter zu leitende amtsseitige Empfangssignal.

Gemäß noch einer weiteren vorteilhaften Weiterbildung der Erfindung erfolgt das Einfügen der Bandbreiteninformation über CLIP.

Mit Vorteil ist vorgesehen, dass ein Rückgewinnen der eingefügten Bandbreiteninformation in einem Endgerät durchgeführt wird und auf seiner Grundlage eine weitere Bandbegrenzung durchgeführt wird.

Gemäß einer vorteilhaften Ausbildung der Erfindung ist vorgesehen, dass das Rückgewinnen der Bandbreiteninformation über CLIP aus dem jeweiligen Empfangssignal erfolgt.

Hinsichtlich des Computer-Programm-Produkts wird diese Aufgabe mit einem auf einem maschinell lesbaren Träger gespeicherten Programmkode gelöst, der die vorstehend beschriebenen Funktionen bzw. die Verfahrensschritte durchführt, wenn das Programmprodukt auf einem Rechner abläuft.

In den weiteren Ansprüchen sind weitere vorteilhafte Ausgestaltungen der Erfindung gekennzeichnet.

Die Erfindung wird nachfolgend anhand von Ausführungsbeispielen unter Bezugnahme auf die Zeichnung näher beschrieben.

Es zeigen:
Figur 1 eine vereinfachte Blockdarstellung einer Kommunikationsanlage mit einem Gateway und einer daran angeschalteten Basisstation mit zugehörigem mobilen Endgerät, in dem die vorliegende Erfindung implementiert sein kann;
Figur 2 eine vereinfachte Blockdarstellung einer Kommunikationsanlage mit einem Gateway und einem Telekommunikationsendgerät, in dem die vorliegende Erfindung weiterhin implementiert sein kann;
Figur 3 eine vereinfachte Blockdarstellung des erfindungsgemäßen Gateways gemäß Figuren 1 oder 2;
Figur 4 eine vereinfachte Blockdarstellung der erfindungsgemäßen Basisstation und des erfindungsgemäßen mobilen Endgeräts gesäß Figur 1; und
Figur 5 eine vereinfachte Blockdarstellung des erfindungsgemäßen Telekommunikationsendgeräts gemäß Figur 2.

Die Erfindung wird nachfolgend beispielhaft anhand einer Kommunikationsanlage gemäß dem DECT-Standard (Digital European Cordless Telecommunication) beispielhaft beschrieben. Sie ist jedoch nicht darauf beschränkt und umfasst in gleicher Weise auch andere zu realisierende Kommunikationsstandards wie beispielsweise den CAT-iq (Cordless Advanced Technology - internet and quality).

Erfindungsgemäß wird die Möglichkeit der automatischen Umschaltung zwischen beispielsweise einer schmalbandigen und einer breitbandigen Betriebsart ohne Beteiligung des Benutzers beschrieben, wobei von der schmalbandigen Betriebsart der Nachteil eines erhöhten Rauschens beseitigt ist.

Nachfolgend werden unter einer schmalbandigen Betriebsart Bandbreitenfrequenzen bis 4 kHz verstanden, wie sie beispielsweise bei herkömmlichen ISDN-Telefonen (Integrated Services Digital Network) oder analogen Telefonen verwendet werden. Unter einer breitbandigen Betriebsart werden nachfolgend insbesondere Frequenzen von 4 kHz bis 8 kHz verstanden, wie sie beispielsweise in sogenannten VoIP-Telefonen (Voice over IP) zur Verwendung kommen. Selbstverständlich sind auch weitere Bandbreiten-Betriebsarten denkbar, wobei drei oder mehr Bandbreiten geschaltet werden können. In gleicher Weise ist die Erfindung nicht auf die vorstehend beschriebenen Frequenzen beschränkt, sondern umfasst in gleicher Weise davon verschiedene Frequenzbereiche.

Erfindungsgemäß kann beispielsweise sowohl im Gateway bzw. Netzwerkknoten als auch im Telekommunikationsendgerät bzw. Telefon oder einer Teilnehmeranlage wie beispielsweise einer Basisstation mit mobilem Endgerät gemäß DECT-Standard eine Senderichtung dauerhaft in der breitbandigen Betriebsart (WB, Wide Band) betrieben werden. Eine Empfangsrichtung der jeweiligen Geräte kann zu Anfang der Verbindung in einer schmalbandigen Betriebsart (NB, Narrow Band) betrieben werden. Im Empfangssignal und insbesondere in einem empfangenen Kanal wird beispielsweise im oberen Frequenzband ( > 4kHz) dauerhaft eine Frequenzanalyse durchgeführt. Ist auf Grund dieser Frequenzanalyse davon auszugehen, dass das empfangene Signal bzw. Empfangssignal ein breitbandiges Signal (WB) ist, so kann nunmehr auch die Empfangsrichtung auf eine breitbandige Betriebsart umgeschaltet werden. In einem Kommunikationssystem gemäß dem DECT-Standard kann eine derartige Umschaltung derart realisiert werden, dass beispielsweise alle Verbindungen in G722 übertragen werden und im Mobilteil durch ein entsprechendes Filter eine Bandbegrenzung auf 3,4 kHz erfolgt, solange die Kommunikationsverbindung auf Grund der durchgeführten Frequenzanalyse als schmalbandige Verbindung gilt. Dies entspricht einer Bandbegrenzung auf das normale Telefonie- bzw. Sprachband.

Wird andererseits auf Grund der Frequenzanalyse im oberen Frequenzband, d.h. größer 4 kHz, erkannt, dass es sich um eine breitbandige Kommunikationsverbindung handelt, so werden die Filter zur Bandbegrenzung auf eine breitbandige Funktionalität umgeschaltet. In gleicher Weise ist dies auch im Netzwerkknoten bzw. Gateway so zu realisieren, wenn beispielsweise über VoIP eine breitbandige Kommunikationsverbindung aufgebaut wurde. Vorzugsweise kann dies im Netzwerkknoten bzw. Gateway derart realisiert werden, dass die teilnehmerseitige Schnittstelle (FXS, Foreign eXchange Subscriber) als breitbandig oder schmalbandig konfiguriert werden kann, da üblicherweise davon ausgegangen werden kann, dass das angeschaltete Telekommunikationsendgerät bzw. Telefon immer oder nie breitbandfähig ist. Erfindungsgemäß kann somit zuverlässig verhindert werden, dass mit einem B-Teilnehmer breitbandige Kommunikationsverbindungen bzw. Gespräche ausgehandelt werden, obwohl nur schmalbandige (z.B. DECT-) Geräte angeschaltet sind. Beim angeschalteten Telekommunikationsendgerät ist dies umgekehrt nicht der Fall, da die teilnehmerseitige Schnittstelle (FXS) abhängig von der Kommunikationsverbindung schmalbandig oder breitbandig sein kann.

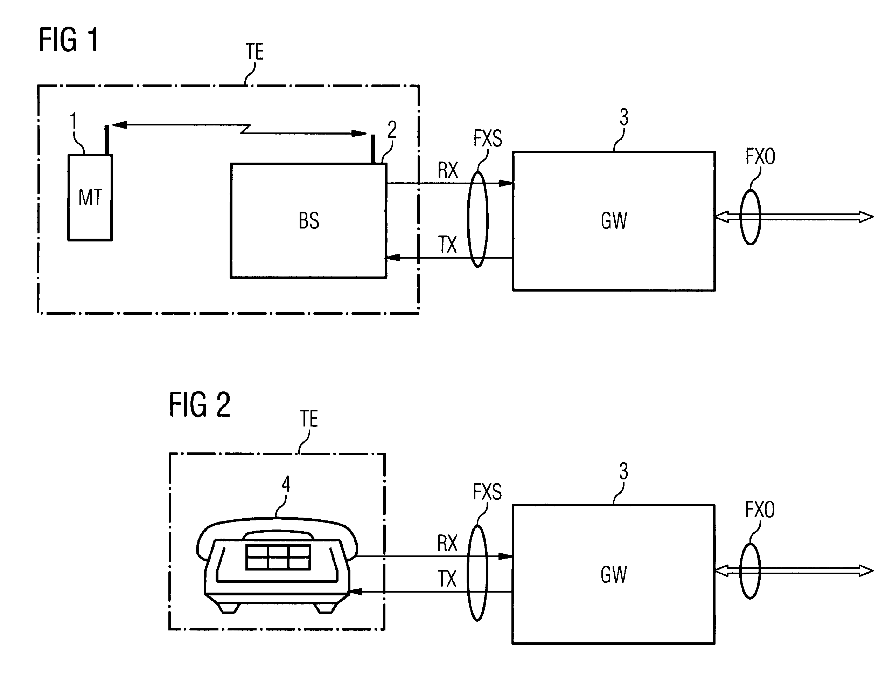

Figur 1 zeigt eine vereinfachte Blockdarstellung einer erfindungsgemäßen Kommunikationsanlage gemäß einem ersten Ausführungsbeispiel, wobei an einem Gateway bzw. Netzwerkknoten 3 eine Basisstation 2 und daran ein mobiles Endgerät 1 angeschaltet sein kann. Das mobile Endgerät 1 und die Basisstation 2 stellen ein sogenanntes Terminalequipment TE bzw. eine Teilnehmereinrichtung dar, welche beispielsweise als Klein-Nebenstellenanlage ausgestaltet sein kann. Obwohl in Figur 1 lediglich ein mobiles Endgerät 1 dargestellt ist, können selbstverständlich auch weitere mobile Endgeräte drahtlos mit der Basisstation 2 verbunden sein. In gleicher Weise können auch drahtgebundene Endgeräte an einer Basisstation angeschaltet sein (nicht dargestellt).

Die Klein-Nebenstellenanlage TE basiert beispielsweise auf dem DECT-Standard oder dem CAT-iq-Standard. Der Netzwerkknoten bzw. das Gateway 3 besitzt in Richtung zur Klein-Nebenstellenanlage TE eine teilnehmerseitige Schnittstelle FXS (Foreign eXchange Subscriber interface) und amtsseitig eine amtsseitige Schnittstelle FXO (Foreign eXchange Office interface).

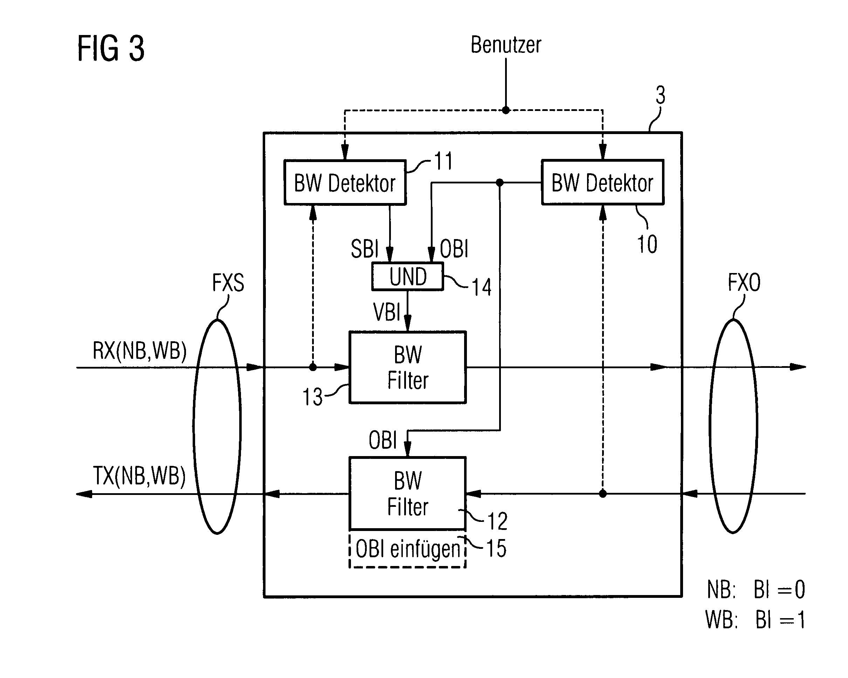

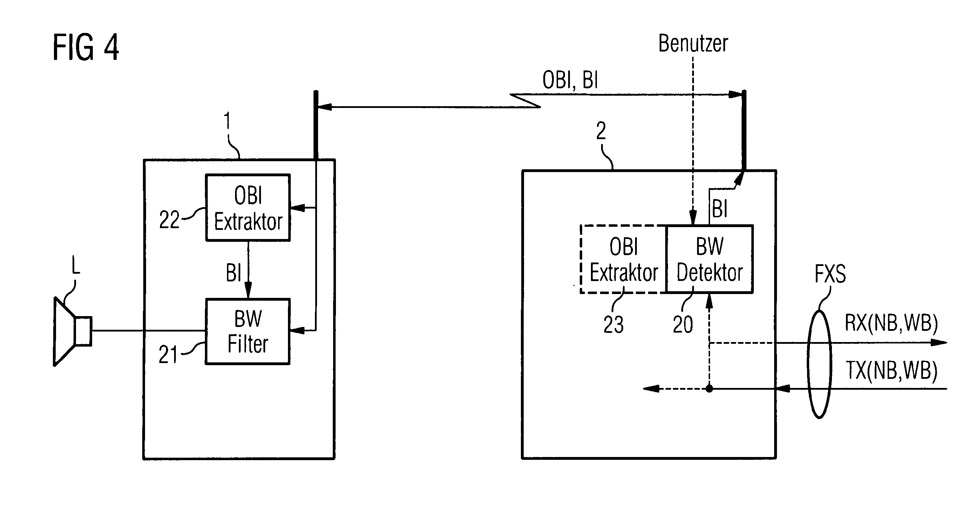

Die genaue Funktionsweise wird nachstehend anhand von Figur 3 und Figur 4 im Einzelnen beschrieben.

Figur 3 zeigt hierbei eine vereinfachte Blockdarstellung des erfindungsgemäßen Netzwerkknotens bzw. Gateways 3, wobei auf die Darstellung der üblicherweise vorhandenen weiteren Funktionalitäten dieses Netzwerkknotens verzichtet wird, um die Übersichtlichkeit nicht zu gefährden. Gemäß Figur 3 weist das Gateway 3 eine amtsseitige Frequenz-Analyseeinheit 10 zum Durchführen einer Bandbreiten-Analyse eines amtsseitigen Empfangssignals und zum Erzeugen einer amtsseitigen Bandbreiteninformation OBI auf. Genauer gesagt kann das Empfangssignal auf der amtsseitigen Schnittstelle FXO beispielsweise durch eine Frequenzanalyse im oberen Frequenzband des Empfangssignals z.B. größer 4 kHz durchgeführt werden, um festzustellen, ob im empfangenen Kanal eventuell breitbandige Signalanteile vorhanden sein könnten und folglich eine Umschaltung auf den breitbandigen Betriebsmodus notwendig ist. Beispielsweise kann eine derartige Frequenzanalyse auf der Grundlage der Fast-Fourier-Transformation (FFT) durchgeführt werden. Die Frequenz-Analyseeinheit 10 erzeugt in Abhängigkeit von der Frequenzanalyse des amtsseitigen Empfangssignals die amtsseitige Bandbreiteninformation OBI, wobei beispielsweise Schmalbandigkeit mit einer Bandbreiteninformation OBI = 0 und eine Breitbandigkeit mit einer Bandbreiteninformation OBI = 1 angezeigt werden kann.

Gemäß Figur 3 wird diese amtsseitige Bandbreiteninformation OBI einer amtsseitigen Bandbreiten-Begrenzungseinheit 12 zugeführt, die in Abhängigkeit von der zugeführten Bandbreiteninformation OBI eine Bandbreite des amtsseitigen Empfangssignals begrenzt oder gegebenenfalls eine Bandbegrenzung aufhebt. Im vorliegenden Fall, bei dem zu Anfang der Verbindung eine schmalbandige Betriebsart eingestellt ist, würde beispielsweise die Bandbreiten-Begrenzungseinheit auf breitbandig umgeschaltet, sofern die amtsseitige Bandbreiteninformation OBI = 1 ist und damit Breitbandigkeit des empfangenen Signals anzeigt.

Die Bandbreiten-Begrenzungseinheit 12 stellt vorzugsweise die Bandbegrenzung kontinuierlich ein, wodurch ein Hörempfinden des Benutzers nicht nachteilig beeinträchtigt wird. Beispielsweise kann bei Erkennen eines breitbandigen Empfangssignals das obere Frequenzband von 4 kHz bis 8 kHz langsam hinzugeschaltet werden oder eine jeweilige Verstärkung in den entsprechenden Frequenzanteilen kontinuierlich erhöht werden. Ein Umschaltvorgang von schmalbandig auf breitbandig und umgekehrt ist dadurch für den Benutzer kaum hörbar.

Zur Realisierung der Bandbreiten-Begrenzungseinheit 12 kann beispielsweise ein Filter und insbesondere ein Frequenzfilter verwendet werden. Alternativ kann die Bandbreiten-Begrenzungseinheit jedoch auch durch eine Vielzahl von einstellbaren Kodiereinheiten und insbesondere Sprachkodecs realisiert werden, was insbesondere bei einer Realisierung der Bandbreiten-Anpassung in einem Endgerät von Vorteil ist, da dort üblicherweise derartige Sprachkodecs vorhanden sind. Auf diese Weise kann gemäß Figur 3 ein breitbandiges Empfangssignal, welches zunächst als schmalbandiges Signal weitergeleitet wurde, nach Erfassen seiner breitbandigen Eigenschaften als breitbandiges Signal weitergeleitet werden.

Gemäß Figur 3 gilt Gleiches auch in umgekehrter Richtung, wobei ein an einer teilnehmerseitigen Schnittstelle FXS (Foreign eXchange Subscriber interface) empfangenes Signal von einer teilnehmerseitigen Frequenz-Analyseeinheit 11 analysiert wird und eine teilnehmerseitige Bandbreiteninformation SBI erzeugt wird. Wiederum kann die Frequenzanalyse vorzugsweise im oberen Frequenzband größer 4 kHz des Empfangssignals durchgeführt werden und insbesondere auf der Fast-Fourier-Transformation basieren. Grundsätzlich besteht nunmehr wiederum die Möglichkeit diese teilnehmerseitige Bandbreiteninformation SBI direkt einer teilnehmerseitigen Bandbreiten-Begrenzungseinheit 13 zuzuführen und wie vorstehend beschrieben eine Bandbreitenbegrenzung bzw. Bandbreitenanpassung vorzunehmen.

Da jedoch üblicherweise die Telekommunikationsendgeräte hinsichtlich ihrer jeweiligen Bandbreite keine Veränderungen aufweisen, sondern fest sind, kann gemäß Figur 3 ferner eine Verknüpfungseinheit 14 zum Verknüpfen der teilnehmerseitigen Bandbreiteninformation SBI mit der amtsseitigen Bandbreiteninformation OBI und zum Erzeugen einer verknüpften Bandbreiteninformation VBI vorgesehen sein, wobei die teilnehmerseitige Bandbreiten-Begrenzungseinheit 13 in Abhängigkeit von der verknüpften Bandbreiteninformation VBI ansteuerbar ist. Die Verknüpfungseinheit 14 ist hierbei derart ausgestaltet, dass die Verknüpfung der Bandbreiteninformationen SBI und OBI derart durchgeführt wird, dass die Begrenzung bzw. Anpassung der Bandbreiten auf die kleinste der zur Verfügung stehenden Bandbreiten angewendet wird. Beispielsweise kann eine derartige Verknüpfung durch eine logische UND- bzw. AND-Verknüpfung realisiert werden, sofern eine schmalbandige Bandbreiteninformation mit BI = 0 und eine breitbandige Bandbreiteninformation mit BI = 1 gekennzeichnet wird. Eine derartige Realisierung hat den Vorteil, dass die teilnehmerseitige Bandbreiten-Begrenzungseinheit 13 nur dann auf die breitbandige Betriebsart umgeschaltet wird, wenn sowohl das amtsseitig empfangene Signal als auch das teilnehmerseitig empfangene Signal als breitbandig erkannt werden.

Üblicherweise ist dem Gateway 3 bereits bei Festlegung eines Verbindungsweges von FXO nach FXS (und umgekehrt) bekannt, ob breitbandige oder schmalbandige Signale ankommen, da insbesondere bei VoIP die Kodiereinheiten (Codecs) ausgehandelt werden und bei ISDN die Bandbreite per Protokoll festgelegt wird. Daher kann die Bandbreiteninformation auch aus der ausgehandelten Verbindung (ISDN/Analog/VoIP) sowie der festgelegten Codecs (nicht dargestellt) für die digitale Verbindung gesteuert abgeleitet werden und die Bandbreiten-Begrenzungseinheiten 12 und 13 entsprechend gesteuert werden.

Gemäß Figur 3 kann ferner zusätzlich zur automatischen Bandbreitenbegrenzung bzw. -anpassung eine manuell gesteuerte Bandbreitenanpassung durch einen Benutzer realisiert werden, wobei die Frequenz-Analyseeinheiten 10 und/oder 11 unmittelbar durch den Benutzer schaltbar sind und entsprechende Bandbreiteninformationen manuell erzeugt werden. Dieses ermöglicht für Sonderfälle eine manuelle Korrektur der automatisch ausgewählten Bandbreitenanpassung.

Gemäß Figur 3 kann optional ferner eine Einfügeeinheit 15 zum Einfügen beispielsweise der amtsseitigen Bandbreiteninformation OBI in das weiterzuleitende Empfangssignal realisiert sein. Diese kann sich beispielsweise im amtsseitigen Empfangssignalpfad befinden. Insbesondere für Kommunikationsanlagen, in denen die in Figuren 1 und 2 dargestellten Einzelelemente alle vom gleichen Gerätehersteller entworfen wurden, können dadurch weitere Frequenz-Analyseeinheiten für die nachfolgenden Geräte eingespart werden, wie nachfolgend erläutert wird.

Gemäß Figur 3 kann demzufolge die Einfügeeinheit 15 die von der amtsseitigen Analyseeinheit 10 erfasste Bandbreiteninformation OBI über beispielsweise CLIP (Caller Line Identification Protocol) in das weiterzuleitende Empfangssignal eingefügt werden, wie es beispielsweise gemäß DECT-Standard zur Verfügung steht.

Gemäß Figur 4 kann nunmehr in der Basisstation 2 eine entsprechende Rückgewinnungseinheit 23 realisiert sein, die aus dem jeweils empfangenen Signal die vorher eingefügte Bandbreiteninformation OBI wiederum beispielsweise über CLIP extrahiert bzw. rückgewinnt und einem jeweiligen mobilen Endgerät 1 über eine drahtlose Schnittstelle zur Verfügung stellt. Die Bandbreiteninformation OBI kann hierbei wiederum in das über die drahtlose Schnittstelle übertragene Signal an einer entsprechenden Stelle eingefügt werden und wird im mobilen Endgerät durch eine weitere Rückgewinnungseinheit 22 endgültig rückgewonnen bzw. extrahiert und steuert nunmehr wiederum eine Bandbreiten-Begrenzungseinheit 21 im mobilen Endgerät 1 an, wodurch in Abhängigkeit von der im Gateway 3 analysierten Bandbreiteninformation OBI eine Bandbreitenbegrenzung bzw. Bandbreitenanpassung des empfangenen Signals durchgeführt wird und das Signal je nachdem breitbandig oder schmalbandig an einen Lautsprecher L des mobilen Endgeräts 1 ausgegeben wird.

Gemäß Figur 4 kann grundsätzlich in der Basisstation 2 ebenfalls eine Frequenz-Analyseeinheit 20 zum Durchführen einer vorstehend beschriebenen Frequenzanalyse des vom Gateway gelieferten Signals verwendet werden, wodurch wiederum eine Bandbreiteninformation BI erzeugt und über die drahtlose Schnittstelle an das mobile Endgerät gesendet wird. Die Verwendung einer derartigen Analyseeinheit 20 in der Basisstation ermöglicht die Verwendung der Basisstation 2 auch an Geräte oder Gateways, welche keine erfindungsgemäße Bandbreiteninformation-Einfügefunktionalitäten aufweisen. Somit ist auch eine Kompatibilität mit anderen Herstellern gewährleistet.

In gleicher Weise kann auch eine (nicht dargestellte) Bandbreitenbegrenzung bzw. -anpassung bereits in der Basisstation 2 durchgeführt werden, um wiederum eine Kompatibilität mit anderen Herstellern von mobilen Endgeräten 1 zu gewährleisten. Vorzugsweise wird jedoch gemäß Figur 4 die Bandbreiten-Begrenzungseinheit 21 direkt im mobilen Endgerät 1 angeordnet und insbesondere unter Verwendung der dort ohnehin vorhandenen Sprachkodecs bzw. Kodiereinheiten realisiert. Dies ermöglicht eine außerordentlich kostengünstige Realisierung dieser Filterfunktion unter Verwendung von ohnehin vorhandenen Kodiereinheiten für die Sprachkodierung.

Ferner sei darauf hingewiesen, dass eine Bandbreitenerfassungseinheit in Form der Rückgewinnungseinheit 23 und/oder der Analyseeinheit 20 nicht zwingend in der Basisstation 2 vorhanden sein muss, sofern die Bandbreiteninformation bereits über CLIP bis an das mobile Endgerät 1 weitergeleitet werden kann. Grundsätzlich sind selbstverständlich weitere Protokolle zum Realisieren der Einfügefunktionalität für die Bandbreiteninformation BI denkbar.

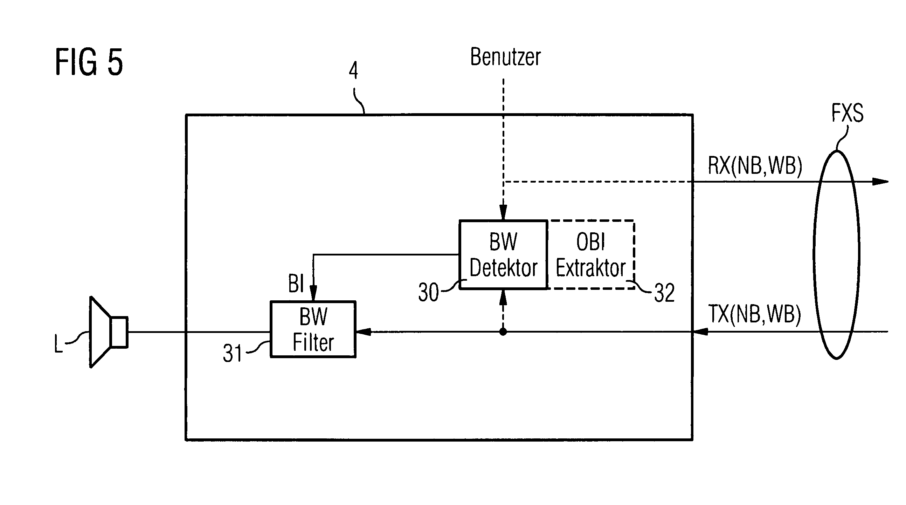

Figur 5 zeigt eine vereinfachte Blockdarstellung des Telekommunikationsendgeräts 4 gemäß Figur 2 gemäß einem weiteren Ausführungsbeispiel der vorliegenden Erfindung, wobei gleiche Bezugszeichen gleiche oder entsprechende Elemente wie in Figur 4 bezeichnen und auf eine wiederholte Beschreibung nachfolgend verzichtet wird.

Gemäß Figur 5 kann an Stelle der in Figur 1 dargestellten Basisstation mit zugehörigem mobilen Endgerät auch unmittelbar ein Telekommunikationsendgerät 4 in Form beispielsweise eines VoIP-Telefons als Terminalequipment bzw. Teilnehmereinrichtung TE an das Gateway bzw. den Netzwerkknoten 3 angeschaltet werden. Wie bereits vorstehend beschrieben, kann wiederum eine Frequenzanalyse des empfangenen Signals mittels einer Analyseeinheit 30 durchgeführt werden, welche daraufhin eine Bandbreiteninformation erzeugt und damit eine Bandbreiten-Begrenzungseinheit 31 ansteuert. Alternativ oder zusätzlich kann ferner eine Bandbreiten-Rückgewinnungseinheit 32 realisiert sein, welche wiederum beispielsweise eine vorher über CLIP eingefügte Bandbreiteninformation aus dem Empfangssignal extrahiert und dadurch die Bandbreiteninformation der Bandbreiten-Begrenzungseinheit 31 zuführt. Ferner kann wiederum ein Benutzer auch die Analyseeinheit 30 bzw. die Rückgewinnungseinheit 32 manuell ansteuern um so die Bandbreiteninformation BI bzw. OBI manuell einzustellen. Auf diese Weise kann manuell oder entsprechend der Bandbreite des empfangenen Signals eine Bandbreitenanpassung durchgeführt und das so angepasste Signal dem Benutzer über den Lautsprecher L ausgegeben. Somit kann ohne notwendige Standardisierung auf benutzerfreundliche Art und Weise eine Bandbreitenanpassung realisiert werden, die ein unerwünschtes Rauschen insbesondere bei Verwendung von schmalbandigen Signalen zuverlässig verhindert. Die Funktionalität der Bandbreiten-Begrenzungseinheit 31 sowie der Frequenz-Analyseeinheit 30 und der Rückgewinnungseinheit 32 entspricht der Funktionalität von Figur 3, weshalb auf eine wiederholte Beschreibung nachfolgend verzichtet wird.

Die Erfindung betrifft ferner ein Verfahren zur Bandbreitenanpassung in einem Telekommunikationsnetzwerk, wobei eine Bandbreite eines Empfangssignals analysiert und eine zugehörige Bandbreiteninformation erzeugt wird. Die Bandbreite des Empfangssignals wird daraufhin in Abhängigkeit von der Bandbreiteninformation begrenzt bzw. angepasst.

In gleicher Weise betrifft die vorliegende Erfindung ein Computer-Programm-Produkt mit auf einem maschinenlesbaren Träger gespeicherten Programmcode zur Durchführung der vorstehend beschriebenen Verfahrensschritte, wenn das Programmprodukt auf einem Rechner abläuft.

Die Erfindung wurde vorstehend anhand eines Kommunikationssystems gemäß DECT-Standard beschrieben. Sie ist jedoch nicht darauf beschränkt und umfasst in gleicher Weise auch alternative Kommunikationssysteme welche auf davon unterschiedlichen Standards beruhen.

### Bezugszeichenliste

- 1: mobiles Endgerät
- 2: Basisstation
- 3: Gateway
- 4: Telekommunikationsendgerät
- 10: amtsseitige Analyseeinheit
- 11: teilnehmerseitige Analyseeinheit
- 12: amtsseitige Bandbreiten-Begrenzungseinheit
- 13: teilnehmerseitige Bandbreiten-Begrenzungseinheit
- 14: Verknüpfungseinheit
- 20, 30: Analyseeinheit
- 22, 23, 32: Rückgewinnungseinheit
- 21, 31: Bandbreiten-Begrenzungseinheit
- M: Mikrofon
- FXS: teilnehmerseitige Schnittstelle
- FXO: amtsseitige Schnittstelle
- BI: Bandbreiteninformation
- SBI: teilnehmerseitige Bandbreiteninformation
- OBI: amtsseitige Bandbreiteninformation

## Patentansprüche

1. Vorrichtung zur Bandbreitenanpassung mit einer teilnehmerseitigen Schnittstelle (FXS) und einer amtsseitigen Schnittstelle (FXO), wobei die Vorrichtung in einem Gateway oder in einem Netzwerkknoten realisiert ist, mit:
einer teilnehmerseitigen Analyseeinheit (11) zum Durchführen einer Bandbreiten-Analyse eines teilnehmerseitigen Empfangssignals und zum Erzeugen einer teilnehmerseitigen Bandbreiteninformation (SBI) und
einer teilnehmerseitigen Bandbreiten-Begrenzungseinheit (13) zum Begrenzen einer Bandbreite des teilnehmerseitigen Empfangssignals in Abhängigkeit von der teilnehmerseitigen Bandbreiteninformation (SBI),
**gekennzeichnet durch**
eine amtsseitige Analyseeinheit (10) zum Durchführen einer Bandbreiten-Analyse eines amtsseitigen Empfangssignals und zum Erzeugen einer amtsseitigen Bandbreiteninformation (OBI);
eine amtsseitige Bandbreiten-Begrenzungseinheit (12) zum Begrenzen einer Bandbreite des amtsseitigen Empfangssignals in Abhängigkeit von der amtsseitigen Bandbreiteninformation (OBI), und
eine Verknüpfungseinheit (14) zum Verknüpfen der teilnehmerseitigen Bandbreiteninformation mit der amtsseitigen Bandbreiteninformation (OBI) zum Erzeugen einer verknüpften Bandbreiteninformation (VBI), wobei die teilnehmerseitige Bandbreiten-Begrenzungseinheit (13) in Abhängigkeit von der verknüpften Bandbreiteninformation (VBI) steuerbar ist.

2. Vorrichtung nach Patentanspruch 1,
**gekennzeichnet durch** eine Einfügeeinheit (15) zum Einfügen der amtsseitigen Bandbreiteninformation (OBI) in das weiter zu leitende Empfangssignal.

3. Vorrichtung nach einem der Patentansprüche 1 bis 2,
**dadurch gekennzeichnet, dass** die Analyseeinheit (10, 11; 20; 30) eine Frequenzanalyse im oberen Frequenzband des Empfangssignals durchführt.

4. Vorrichtung nach Patentanspruch 3,
**dadurch gekennzeichnet dass** die Frequenzanalyse auf der Fast-FourierTransformation basiert.

5. Vorrichtung nach einem der Patentansprüche 1 bis 4,
**dadurch gekennzeichnet, dass** die Analyseeinheit (10, 11; 20; 30) zwischen schmalbandigen, insbesondere kleiner 4 kHz, und breitbandigen, insbesondere zwischen 4 kHz und 8 kHz, Empfangssignalen (NB, WB) unterscheidet.

6. Vorrichtung nach einem der Patentansprüche 1 bis 5,
**dadurch gekennzeichnet, dass** die Bandbreiten-Begrenzungseinheit (12, 13; 21; 31) kontinuierlich einstellbar ist.

7. Vorrichtung nach einem der Patentansprüche 1, bis 6,
**dadurch gekennzeichnet, dass** die Bandbreiten-Begrenzungseinheit (12, 13; 21; 31) ein Filter aufweist.

8. Vorrichtung nach einem der Patentansprüche 1 bis 6,
**dadurch gekennzeichnet, dass** die Bandbreiten-Begrenzungseinheit (12, 13; 21; 31) eine Vielzahl von einstellbaren Kodiereinheiten aufweist.

9. Vorrichtung nach einem der Patentansprüche 1 bis 8,
**dadurch gekennzeichnet, dass** die Analyseeinheit (10, 11; 20; 30) ferner durch einen Benutzer schaltbar ist.

10. Vorrichtung nach einem der Patentansprüche 2 bis 9,
**dadurch gekennzeichnet dass** die Einfügeeinheit (15) die Bandbreiteninformation über CLIP in das weiterzuleitende Empfangssignal einfügt.

11. Verfahren zur Bandbreitenanpassung innerhalb eines Gateways oder eines Netzwerkknoten in einem Telekorrmmunikationsnetzwerk mit den Schritten:
Analysieren einer Bandbreite eines Empfangssignals und Erzeugen einer dazugehörigen Bandbreiteninformation (BI; OBI, SBI); und
Begrenzen einer Bandbreite des Empfangssignals in Abhängigkeit von der Bandbreiteninformation (BI; OBI, SBI),
wobei beim Analysieren ein teilnehmerseitiges sowie ein amtsseitiges Empfangssignal analysiert wird, **dadurch gekennzeichnet, dass** eine teilnehmerseitige sowie amtsseitige Bandbreiteninformation (SBI, OBI) erzeugt wird und ein Verknüpfen der Bandbreiteninformation derart durchgeführt wird, dass die Begrenzung auf eine kleinste zugehörige Bandbreite nur auf das teilnehmerseitige Empfangssignal angewendet wird.

12. Verfahren nach Patentanspruch 11, wobei beim Analysieren eine Frequenzanalyse im oberen Frequenzband des Empfangssignals durchgeführt wird.

13. Verfahren nach Patentanspruch 12, wobei die Frequenzanalyse auf der Fast-Fourier-Transformation basiert.

14. Verfahren nach einem der Patentansprüche 11 bis 13, wobei beim Analysieren zwischen schmalbandigen, insbesondere kleiner 4 kHz, und breitbandigen, insbesondere zwischen 4 kHz und 8 kHz, Empfangssignalen (NB, WB) unterschieden wird.

15. Verfahren nach einem der Patentansprüche 11 bis 14, wobei das Begrenzen der Bandbreite kontinuierlich erfolgt.

16. Verfahren nach einem der Patentansprüche 11 bis 15, wobei das Begrenzen der Bandbreite ein Filtern ist.

17. Verfahren nach einem der Patentansprüche 11 bis 16, wobei das Begrenzen der Bandbreite unter Verwendung von unterschiedlichen Kodiereinheiten durchgerührt wird.

18. Verfahren nach einem der Patentansprüche 11 bis 17, wobei zur manuellen Einstellung der Bandbreiteninformation eine Analyseeinheit (10, 11; 20; 30) durch einen Benutzer geschaltet wird.

19. Verfahren nach Patentanspruch 11 mit dem weiteren Schritt:
Einfügen der amtsseitigen Bandbreiteninformation (OBI) in das weiter zu leitende amtsseitige Empfangssignal, wobei ein Rückgewinnen der eingefügten Bandbreiteninformation in einem Endgerät durchgeführt wird und auf seiner Grundlage eine weitere Bandbegrenzung durchgeführt wird.

20. Computer-Programm-Produkt mit auf einem maschinenlesbaren Träger gespeicherten Programmcode zur Durchführung des Verfahrens nach einem der Patentansprüche 11 bis 19, wenn das Programmprodukt auf einem Rechner abläuft.

## Claims

1. Apparatus for bandwidth matching having a subscriber interface (FXS) and an office interface (FXO), wherein the apparatus is provided in a gateway or in a network node, having:
a subscriber analysis unit (11) for performing bandwidth analysis on a subscriber received signal and for producing a piece of subscriber bandwidth information (SBI), and
a subscriber bandwidth limiting unit (13) for limiting a bandwidth of the subscriber received signal on the basis of the subscriber bandwidth information (SBI),
**characterized by**
an office analysis unit (10) for performing bandwidth analysis on an office received signal and for producing a piece of office bandwidth information (OBI),
an office bandwidth limiting unit (12) for limiting a bandwidth of the office received signal on the basis of the office bandwidth information (OBI), and
a combinational logic unit (14) for logically combining the subscriber bandwidth information with the office bandwidth information (OBI) in order to produce a piece of logically combined bandwidth information (VBI), wherein the subscriber bandwidth limiting unit (13) can be controlled on the basis of the logically combined bandwidth information (VEI).

2. Apparatus according to Patent Claim 1, **characterized by** an insertion unit (15) for inserting the office bandwidth information (OBI) into the received signal that is to be forwarded.

3. Apparatus according to either of Patent Claims 1 and 2,
**characterized in that** the analysis unit (10, 11; 20; 30) performs frequency analysis in the upper frequency band of the received signal.

4. Apparatus according to Patent Claim 3, **characterized in that** the frequency analysis is based on Fast Fourier Transformation.

5. Apparatus according to one of Patent Claims 1 to 4,
**characterized in that** the analysis unit (10, 11; 20; 30) distinguishes between narrowband, in particular smaller than 4 kHz, and wideband, in particular between 4 kHz and 8 kHz, received signals (NB, WB).

6. Apparatus according to one of Patent Claims 1 to 5,
**characterized in that**
the bandwidth limiting unit (12, 13; 21; 31) can be adjusted continuously.

7. Apparatus according to one of Patent Claims 1 to 6,
**characterized in that** the bandwidth limiting unit (12, 13; 21; 31) has a filter.

8. Apparatus according to one of Patent Claims 1 to 6,
**characterized in that** the bandwidth limiting unit (12, 13; 21; 31) has a multiplicity of adjustable coding units.

9. Apparatus according to one of Patent Claims 1 to 8,
**characterized in that** the analysis unit (10, 11; 20; 30) can also be switched by a user.

10. Apparatus according to one of Patent Claims 2 to 9,
**characterized in that** the insertion unit (15) uses CLIP to insert the bandwidth information into the received signal that is to be forwarded.

11. Method for bandwidth matching within a gateway or a network node in a telecommunication network having the following steps:
a bandwidth of a received signal is analysed and an associated piece of bandwidth information (BI; OBI, SBI) is produced; and
a bandwidth of the received signal is limited on the basis of the bandwidth information (BI; OBI, SBI),
wherein the analysis involves a subscriber received signal and an office received signal being analysed, **characterized in that** a piece of subscriber bandwidth information and a piece of office bandwidth information (SBI, OBI) are produced and the bandwidth information is logically combined such that the limitation to a smallest associated bandwidth is applied only to the subscriber received signal.

12. Method according to Patent Claim 11, wherein the analysis involves the performance of frequency analysis in the upper frequency band of the received signal.

13. Method according to Patent Claim 12, wherein the frequency analysis is based on Fast Fourier Transformation.

14. Method according to one of Patent Claims 11 to 13, wherein the analysis involves distinction between narrowband, in particular smaller than 4 kHz, and wideband, in particular between 4 kHz and 8 kHz, received signals (NB, WB).

15. Method according to one of Patent Claims 11 to 14, wherein the bandwidth is limited continuously.

16. Method according to one of Patent Claims 11 to 15, wherein the limitation of the bandwidth is filtering.

17. Method according to one of Patent Claims 11 to 16, wherein the bandwidth is limited by using different coding units.

18. Method according to one of Patent Claims 11 to 17, wherein the bandwidth information is adjusted manually by virtue of an analysis unit (10, 11; 20; 30) being switched by a user.

19. Method according to Patent Claim 11 having the following further step:
the office bandwidth information (OBI) is inserted into the office received signal that is to be forwarded, wherein the inserted bandwidth information is recovered in a terminal and further band limiting is performed on the basis of this.

20. Computer program product having program code, which is stored on a machine-readable medium, for performing the method according to one of Patent Claims 11 to 19 when the program product is executed on a computer.

## Revendications

1. Dispositif d'adaptation de largeur de bande avec une interface côté abonné (FXS) et une interface côté central (FXO), le dispositif étant réalisé dans une passerelle ou dans un noeud de réseau, avec :
- une unité d'analyse côté abonné (11) pour la mise en oeuvre d'une analyse de largeur de bande d'un signal de réception côté abonné et pour la production d'une information de largeur de bande côté abonné (SBI) et
- une unité de limitation de largeur de bande côté abonné (13) pour la limitation d'une largeur de bande du signal de réception côté abonné en fonction de l'information de largeur de bande côté abonné (SBI),
**caractérisé par**
- une unité d'analyse côté central (10) pour la mise en oeuvre d'une analyse de largeur de bande d'un signal de réception côté central et pour la production d'une information de largeur de bande côté central (OBI) ;
- une unité de limitation de largeur de bande côté central (12) pour la limitation d'une largeur de bande du signal de réception côté central en fonction de l'information de largeur de bande côté central (OBI) ; et
- une unité de combinaison (14) pour la combinaison de l'information de largeur de bande côté abonné avec l'information de largeur de bande côté central (OBI) afin de produire une information de largeur de bande combinée (VBI), l'unité de limitation de largeur de bande côté abonné (13) pouvant être commandée en fonction de l'information de largeur de bande combinée (VBI).

2. Dispositif selon la revendication 1, **caractérisé par** une unité d'insertion (15) pour l'insertion de l'information de largeur de bande côté central (OBI) dans le signal de réception à retransmettre.

3. Dispositif selon l'une des revendications 1 à 2, **caractérisé en ce que** l'unité d'analyse (10, 11 ; 20 ; 30) effectue une analyse de fréquence dans la bande de fréquence supérieure du signal de réception.

4. Dispositif selon la revendication 3, **caractérisé en ce que** l'analyse de fréquence est basée sur la transformation de Fourier rapide.

5. Dispositif selon l'une des revendications 1 à 4, **caractérisé en ce que** l'unité d'analyse (10, 11 ; 20 ; 30) distingue entre signal de réception bande étroite (NB), notamment inférieur à 4 kHz, et signal de réception à large bande (WB), notamment entre 4 kHz et 8 kHz.

6. Dispositif selon l'une des revendications 1 à 5, **caractérisé en ce que** l'unité de limitation de largeur de bande (12, 13 ; 21 ; 31) est réglable de façon continue.

7. Dispositif selon l'une des revendications 1 à 6, **caractérisé en ce que** l'unité de limitation de largeur de bande (12, 13 ; 21 ; 31) comporte un filtre.

8. Dispositif selon l'une des revendications 1 à 6, **caractérisé en ce que** l'unité de limitation de largeur de bande (12, 13 ; 21 ; 31) comporte une pluralité d'unités de codage réglables.

9. Dispositif selon l'une des revendications 1 à 8, **caractérisé en ce que** l'unité d'analyse (10, 11 ; 20 ; 30) est, en outre, commutable par un utilisateur.

10. Dispositif selon l'une des revendications 2 à 9, **caractérisé en ce que** l'unité d'insertion (15) insère par le biais du procédé CLIP (Présentation d'Identification de la Ligne Appelante) l'information de largeur de bande dans le signal de réception à retransmettre.

11. Procédé pour l'adaptation de largeur de bande à l'intérieur d'une passerelle ou d'un noeud de réseau dans un réseau de télécommunication avec les étapes consistant à:
- analyser une largeur de bande d'un signal de réception et produire une information de largeur de bande associée (BI ; OBI, SBI) et
- limiter une largeur de bande du signal de réception en fonction de l'information de largeur de bande (BI ; OBI, SBI),
un signal de réception côté abonné aussi bien que côté central étant analysé lors de l'analyse,
**caractérisé en ce qu'**une information de largeur de bande côté abonné (SBI) aussi bien que côté central (OBI) est produite et **en ce qu'**une combinaison de l'information de largeur de bande est effectuée de telle sorte que la limitation à une largeur de bande associée la plus petite n'est appliquée qu'au signal de réception côté abonné.

12. Procédé selon la revendication 11, selon lequel, lors de l'analyse une analyse de fréquence dans la bande de fréquence supérieure du signal de réception est effectuée.

13. Procédé selon la revendication 12, selon lequel l'analyse de fréquence est basée sur la transformation de Fourier rapide.

14. Procédé selon l'une des revendications 11 à 13, selon lequel, lors de l'analyse, on distingue entre signal de réception à bande étroite (NB), notamment inférieur à 4 kHz, et signal de réception à large bande (WB), notamment entre 4 kHz et 8 kHz.

15. Procédé selon l'une des revendications 11 à 14, selon lequel la limitation de la largeur de bande s'effectue de façon continue.

16. Procédé selon l'une des revendications 11 à 15, selon lequel la limitation de la largeur de bande est un filtrage.

17. Procédé selon l'une des revendications 11 à 16, selon lequel la limitation de la largeur de bande est effectuée en utilisant des unités de codage différentes.

18. Procédé selon l'une des revendications 11 à 17, selon lequel, pour le réglage manuel de l'information de largeur de bande, une unité d'analyse (10, 11 ; 20 ; 30) est commutée par un utilisateur.

19. Procédé selon la revendication 1 avec l'étape aditionnelle consistant à:
- insérer l'information de largeur de bande côté central (OBI) dans le signal de réception côté central à retransmettre, une récupération de l'information de largeur de bande insérée étant effectuée dans un terminal et, sur la base de celle-ci, une autre limitation de bande étant effectuée.

20. Produit formant programme d'ordinateur avec un code de programme stocké sur un support lisible par machine pour la mise en oeuvre du procédé selon l'une des revendications 11 à 19 lorsque le produit formant programme est exécuté sur un ordinateur.
